## Europäisches Patentamt
## European Patent Office
## Office européen des brevets

(1) Numéro de publication: **0 148 663**
**B1**

(12) **FASCICULE DE BREVET EUROPEEN**

(45) Date de publication du fascicule du brevet: **01.07.87**

(51) Int. Cl.⁴: **C 22 B 11/04, C 01 G 5/00**

(21) Numéro de dépôt: **84402436.4**

(22) Date de dépôt: **29.11.84**

(54) Procédé de récupération de l'argent à partir de solutions de sulfate.

(30) Priorité: **09.12.83 FR 8319825**

(43) Date de publication de la demande:
**17.07.85 Bulletin 85/29**

(45) Mention de la délivrance du brevet:
**01.07.87 Bulletin 87/27**

(84) Etats contractants désignés:
**AT BE CH DE FR GB IT LI LU NL SE**

(56) Documents cités:
**DE-A-2 041 128**
**FR-A-2 313 452**
**US-A-3 476 663**
**US-A-4 107 265**
**US-A-4 229 270**

**CHEMICAL ABSTRACTS, vol. 86, no. 20, 16 mai 1977, page 229, no. 143570x, Columbus, Ohio, US**

(73) Titulaire: **SOCIETE MINIERE ET METALLURGIQUE DE PENARROYA Société anonyme dite:**
**Tour Maine-Montparnasse 33, avenue du Maine**
**F-75755 Paris Cédex 15 (FR)**

(72) Inventeur: **Beutier, Didier**
**48, boulevard Edgar Quinet**
**F-75014 Paris (FR)**
Inventeur: **Predali, Jean-Jacques**
**2, rue Blanquefort**
**F-78310 Elancourt (FR)**

(74) Mandataire: **Ricalens, François**
**Service de la Propriété Industrielle du Groupe IMETAL 1, avenue Albert Einstein B.P. 106**
**F-78191 Trappes Cedex (FR)**

Courier Press, Leamington Spa, England.

EP 0 148 663 B1

# 0 148 663

## Description

La présente invention a pour objet la récupération d'argent contenu dans des solutions sulfuriques.

Dans de nombreuses métallurgies l'argent se trouve en solution en milieu sulfurique, notamment dans les usines de récupération de zinc en phase électrolytique.

Cet argent est souvent mal récupéré et de nombreuses études ont été menées pour récupérer cet argent. On peut citer ainsi le brevet français No. 2.313.452, qui a certes apporté quelques progrès sans que ces progrès soient décisifs car le procédé n'est pas applicable dans tous les cas.

En outre, il existe de nombreux procédés où l'argent transite en milieu sulfurique sans pouvoir être récupéré.

La présente invention a pour objet la récupération de l'argent en milieu sulfurique à l'aide de la blende.

Ce but est atteint au moyen d'un procédé de récupération de l'argent en solution sulfurique, caractérisé par le fait que l'on met ladite solution d'argent en contact avec une quantité de sulfure de zinc au moins égale à la quantité stoechiométrique et dont la surface est au moins égale à K Ag $^{2/3}$×V, K étant une constante, Ag étant la concentration en argent dans la solution exprimée en kilogrammes par mètre cube et V le volume de la solution en mètres cubes, la surface étant exprimée en mètres carrés et la valeur de K étant supérieure ou égale à 10 environ.

Il est bien évident que plus on choisira un coefficient K élevé, meilleure sera la récupération d'argent mais moins élevée sera la concentration de la blende en argent.

Les exemples qui seront exposés par la suite montrent que l'on peut atteindre des teneurs en argent très élevées et qu'il peut être souhaitable de réaliser une précipitation à contre-courant.

La blende argentifère ainsi formée peut être récupérée par tout moyen connu en soi, par exemple par filtration, flottation, gravimétrie ou élutriation physique.

Cette technique de récupération est particulièrement intéressante car l'on peut introduire la blende à toute étape de lixiviation où l'argent se trouve sous forme soluble, ce qui permet de provoquer une accumulation d'argent dans les grains de blende, qui est un composé sulfuré facile à récupérer malgré la présence de sulfate de plomb et de ferrite de zinc qui se retrouvent couramment dans les résidus de lixiviation.

Il est intéressant de noter que la teneur en zinc et en sulfate influe très peu sur la récupération et la teneur finale en argent.

Lorsqu'il y a des ions complexant l'argent dans le milieu sulfate, il conviendra de faire une correction de la teneur en argent et remplacer la valeur de Ag par la valeur de Ag$^+$ réellement libre, valeur qui est aisément déterminée en connaissant, ou en mesurant, le ou les constantes de complexation de l'argent avec lesdits complexants. La relation précédente devient alors $S = K(Ag_1)^{2/3}(Ag_t)/(Ag_1)$ V où Ag$_1$ est la concentration en argent libre, Ag$_t$ est la concentration en argent totale; cette relation est également valable dans le cas de suspension de sel d'argent peu soluble où la concentration en argent libre est au moins égale à $10^{-7}$, de préférence au moins égale à $10^{-5}$.

On peut également noter que l'on à intérêt à utiliser des granulométries de sulfure de zinc extrèmement fines de manière que la surface spécifique du zinc soit très élevé et qu'ainsi l'on puisse obtenir à la fois de très hauts taux de récupération et une forte concentration.

Tous les sulfures de zinc peuvent être utilisés, qu'ils soient d'origine chimique ou d'origine minérale (blende). D'une manière générale, on préfèrera, pour des raisons économiques, la blende très finement broyée, en général une blende dont le d$_{80}$ est inférieur à 10 micromètres.

Les conditions optimales que doivent réunir les solutions de sulfate d'argent sont les suivantes:

—Température: de l'ambiante à 100°C, de préférence de 50 à 80°C. Lorsque la pression atmosphérique est utilisée, des températures supérieures peuvent être choisies si l'on désire travailler à des pressions supérieures.

—Pression: pression atmosphérique. En effet, la valeur de la pression n'a qu'un effet mineur sur la technique décrite dans la présente demande.

—pH: le pH n'a pas d'influence marquée sur le procédé. Les seules limites à observer sont: pour la limite inférieure le pH à partir duquel la blende est attaquée par les protons pour donner de l'acide sulfhydrique qui se dégage; pour la limite supérieure le pH à partir duquel la concentration en argent devient inférieure à $10^{-6}$ M. De préférence, on choisira un pH compris entre 1 à 4.

—Potentiel redox: le potentiel de la solution doit être tel qu'elle n'attaque pas la blende par oxydation de cette dernière. On peut fixer le potentiel par tout moyen adéquat qui n'entraîne pas la précipitation de l'argent par cémentation. De préférence, on utilise de la blende qui dans ce cas n'a pas besoin d'être finement divisée. On peut également utiliser la même blende au même état de division que pour le procédé, ce qui permet de réaliser la réduction de la solution en même temps que la précipitation de l'argent. Il va de soi que la quantité de blende nécessaire est celle qui correspond à la réduction des éléments susceptibles de l'oxyder.

—Durée: la réaction est rapide et peut être estimée inférieure à une demi-heure. Par securité on choisira donc de préférence une durée égale à une heure ou comprise entre une heure et deux heures.

Les exemples non limitatifs suivants ont pour but de mettre les spécialistes à même de déterminer aisément les conditions opératoires qu'il convient d'utiliser dans chaque cas particulier.

2

Exemple 1

On détermine l'aptitude de sulfure d'argent à se fixer sur le sulfure de zinc, dans des conditions voisines de celles du lessivage neutre des minerais sulfurés.

A cet effet, on utilise une solution de sulfate d'argent à 2 grammes par litre, maintenue à 60°C, en présence éventuellement de sulfate de zinc, et on observe la comportement de l'argent après addition de sulfure de zinc chimique ou de blende, le temps de la réaction étant de deux heures.

Les résultats obtenus figurent dans le tableau suivant.

| Essai | Zinc | | | ZnSO$_4$ | Argent | | |
| | Nature | Quantité | | | Entrée g | Sortie g | Rendement % |
| | | Poids g | Zn/Ag | | | | |
| 1 | ZnS chimique | 1,3 | 2 | — | 2,1 | 0,55 | 73,8 |
| 2 | ZnS chimique | 6,5 | 10 | — | 2,1 | 0,01 | 99,5 |
| 3 | ZnS chimique | 1,3 | 2 | 2 M/l | 2,25 | 0,61 | 72,9 |
| 4 | ZnS chimique | 6,5 | 10 | 2 M/l | 2,25 | 0,02 | 99 |
| 5 | blende à 61,46% | 1,3 | 2 | — | 2,15 | 2,10 | 2,3 |
| 6 | blende à 61,46% | 6,5 | 10 | — | 2,15 | 1,85 | 14 |

Les résultats de ces essais montrent que le sulfure de zinc chimique permet la fixation de la plus grande partie de l'argent et, lorsqu'il est présent en grand excès stoechiométrique, de la presque totalité de l'argent, alors que la blende paraît n'en fixer qu'une petite partie. Cependant, le blende utilisée est relativement peu active car elle n'est pas finement broyée. En outre, on constate que, lorsque la réaction peut se poursuivre plus longtemps, la proportion d'argent qui peut être fixé est bien plus importante. En conséquence, dans les conditions de brassage énergique, à température relativement élevée et pendant untemps relativement long, c'est-à-dire dans les conditions utilisées pour la lixiviation des minerais sulfurés de zinc, la blende a une action non négligeable.

Exemple 2

On effectue une séparation du sulfure du zinc enrichi en argent contenu dans un échantillon de résidu pauvre en zinc, appelé "ferrite", car il contient beaucoup de fer sous forme de ferrite de zinc. Ce résidu contient 100 grammes par tonne d'argent, 19,6% de zinc et 26,7% de fer.

Le traitement du résidu comprend les opérations suivantes:

— broyage du résidu à une dimension particulière de 40 micromètres,
— conditionnement à 16% de matière solide pendant 19 minutes, avec addition de chaux, le pH obtenu étant égal à 12,
— second conditionnement de 10 minutes avec addition de sulfate de cuivre à raison d'environ 800 grammes par tonne,
— flottation d'ébauchage pendant 30 minutes,
— deux relavages, avec un temps de flottation de 15 minutes chacun.

3

## 0 148 663

Les résultats obtenus figurent dans le tableau suivant.

| Produit | % P | Teneurs | | | Récupération % | | |
|---|---|---|---|---|---|---|---|
| | | g/t | % | | | | |
| | | Ag | Zn | Fe | Ag | Zn | Fe |
| Concentré | 8,35 | 1037 | 33 | 16,4 | 72,8 | 14,1 | 5,1 |
| Rejet | 91,65 | 35,3 | 18,4 | 27,7 | 27,2 | 85,9 | 94,9 |
| Alimentation | 100 | 119 | 19,6 | 26,7 | 100 | 100 | 100 |

Exemple 3

Cet exemple illustre l'influence de la surface de blende sur la fixation de l'argent.

On opère dans les conditions suivantes:

Température: 60°C

pH: 3,5

Volume de solution: 0,5 litre

Concentration initiale en argent: 0,7 g/l.

On utilise deux qualités de blende:

(a) broyée à 125 micromètres, dont la surface spécifique est de 0,10 m²/g.

(b) broyée à 40 micromètres, dont la surface spécifique est de 0,23 m²/g.

La précipitation d'argent s'effectue en deux heures et l'on dose l'argent résiduel en solution.

| Essai | Blende ajoutée g | Surface équivalente m² | Argent fixé mg/l |
|---|---|---|---|
| 1 | (a) 6,5 | 0,65 | 190 |
| 2 | (b) 6,5 | 1,50 | 228 |
| 3 | (a) 10 | 2,3 | 350 |
| 4 | (b) 21 | 4,8 | 697 |

Le tableau suivant confirme cette influence, pour une solution contenant 4,2 grammes par litre d'argent, en incluant des essais avec du sulfure de zinc chimique (surface spécifique: 7,40 m²/g).

| Blende ajoutée g | Surface équivalente m² | Argent fixé mg/l |
|---|---|---|
| (a) 2,1 | 0,21 | 100 |
| (a) 10,5 | 1,05 | 600 |
| (a) 21 | 2,1 | 760 |
| (b) 21 | 4,83 | 1 480 |
| ZnS 1,3 | 9,62 | 3 100 |
| ZnS 6,5 | 48,1 | 4 200 |

**Revendications**

1. Procédé de récupération de l'argent en solution sulfurique, caractérisé par le fait que l'on met ladite solution d'argent en contact avec une quantité de sulfure de zinc au moins égale à la quantité

4

stoechiométrique et dont la surface est au moins égale à K Ag $^{2/3} \times$ V, K étant une constante, Ag étant la concentration en argent dans la solution exprimée en kilogrammes par mètre cube et V le volume de la solution en mètres cubes, la surface étant exprimée en mètres carrés et la valeur de K étant supérieure ou égale à 10 environ.

2. Procédé selon la revendication 1, caractérisé par le fait que K est supérieur à 20.

3. Procédé selon la revendication 1, caractérisé par le fait que K est compris entre 20 et 50.

4. Procédé selon la revendication 1, caractérisé par le fait que le pH de la solution est compris entre 1 à 4.

5. Procédé selon les revendications 1 à 4 prises séparément, caractérisé par le fait que la température de la solution est compris entre 50 et 80°C.

6. Procédé selon les revendications 1 à 5 prises séparément, caractérisé par le fait que le potentiel redox de la solution est ajusté à la valeur d'équilibre avec la blende.

7. Procédé selon la revendication 6, caractérisé par le fait que le potentiel redox est ajusté avant l'opération de précipitation de l'argent.

8. Procédé selon la revendication 6, caractérisé par le fait que le potentiel redox est ajusté pendant l'opération de précipitation de l'argent en ajoutant à la quantité nécessaire pour précipiter l'argent un excès de blende suffisant pour réduire les espèces susceptibles d'oxyder la blende.

9. Procédé selon les revendications 1 à 8 prises séparément, caractérisé par le fait que la solution d'argent contient en outre un sel d'argent choisi dans le groupe des sels peu solubles et des sels complexés et par le fait que la surface nécessaire à la précipitation de l'argent est égale à $S = K(Ag_1)^{2/3}(Ag_t)/(Ag_1)$ V où $Ag_1$ est la concentration en argent libre, $Ag_t$ est la concentration en argent totale.

10. Procédé selon les revendications 1 à 9 prises séparément, caractérisé par le fait que la blende utilisée est broyée à une granulométrie correspondant à un $d_{80}$ inférieur à 10 micromètres.

**Patentansprüche**

1. Verfahren zum Rückgewinnen des Silbers aus Sulfatlösung, dadurch gekennzeichnet, daß man die Silberlösung in Kontakt mit einer Zinksulfidmenge bringt, die wenigstens gleich der stöchiometrischen Menge ist und deren Oberfläche wenigstens gleich K $Ag^{2/3} \times$ V ist, wobei K eine Konstante ist, Ag die in $Kg/m^3$ ausgedrückte Silberkonzentration in der Lösung ist und V das Volumen der Lösung in $m^3$ ist, die Oberfläche in $m^2$ ausgedrückt ist und der Wert von K über oder gleich etwa 10 ist.

2. Verfahren nach Anspruch 1, dadurch gekennzeichnet, daß K über 20 ist.

3. Verfahren nach Anspruch 1, dadurch gekennzeichnet, daß K im Bereich von 20 bis 50 ist.

4. Verfahren nach Anspruch 1, dadurch gekennzeichnet, daß der pH-Wert der Lösung im Bereich von 1 bis 4 ist.

5. Verfahren nach einem der Ansprüche 1 bis 4, dadurch gekennzeichnet, daß die Temperatur der Lösung im Bereich von 50 bis 80°C ist.

6. Verfahren nach einem der Ansprüche 1 bis 5, dadurch gekennzeichnet, daß das Redoxpotential der Lösung auf den Gleichgewichtswert mit dem Sulfid eingestellt wird.

7. Verfahren nach Anspruch 6, dadurch gekennzeichnet, daß das Redoxpotential vor dem Fällvorgang des Silbers eingestellt wird.

8. Verfahren nach Anspruch 6, dadurch gekennzeichnet, daß das Redoxpotential während des Fällvorgangs des Silbers eingestellt wird, indem man der zum Fällen des Silbers erforderlichen Menge einen Sulfidüberschuß zusetzt, der ausreicht, um die zur Oxidation des Sulfids geeigneten Stoffe zu reduzieren.

9. Verfahren nach einem der Ansprüche 1 bis 8, dadurch gekennzeichnet, daß die Silberlösung außerdem ein Silbersalz enthält, das aus der Gruppe der wenig löslichen Salze und der Komplexsalze gewählt ist, und daß die zum Fällen des Silbers erforderliche Oberfläche gleich $S = K (Ag_1)^{2/3}(Ag_t)/(Ag_1)$ V ist, wobei $Ag_1$ die Konzentration an freiem Silber ist und $Ag_t$ die Konzentration am gesamten Silber ist.

10. Verfahren nach einem der Ansprüche 1 bis 9, dadurch gekennzeichnet, daß das verwendete Sulfid auf eine Korngröße gemahlen wird, die einem $d_{80}$-Wert unter 10 µm entspricht.

**Claims**

1. A process for the recovery of silver contained in a sulphuric solution, characterised in that said silver solution is brought into contact with a quantity of zinc sulphide which is at least equal to the stoichiometric quantity and the surface area of which is at least equal to K $Ag^{2/3} \times$ V, K being a constant, Ag being the concentration of silver in the solution expressed in kilograms per cubic metre and V being the volume of the solution in cubic metres, the area being expressed in square metres and the value of K being greater than or equal to about 10.

2. A process according to Claim 1, characterised in that K is greater than 20.

3. A process according to Claim 1, characterised in that K is between 20 and 50.

4. A process according to Claim 1, characterised in that the pH of the solution is between 1 and 4.

5. A process according to any of Claims 1 to 4, characterised in that the temperature of the solution is between 50 and 80°C.

6. A process according to any of Claims 1 to 5, characterised in that the redox potential of the solution is adjusted to the value of equilibrium with the zinc sulphide.

7. A process according to Claim 6, characterised in that the redox potential is adjusted before precipitation of the silver.

8. A process according to Claim 6, characterised in that the redox potential is adjusted during precipitation of the silver by adding, to the quantity necessary to precipitate the silver, an excess of zinc sulphide sufficient to reduce the species capable of oxidizing the zinc sulphide.

9. A process according to any of Claims 1 to 8, characterised in that the silver solution also contains a silver salt selected from the group of sparingly soluble salts and chelated salts, and in that the surface area necessary for the precipitation of the silver is equal to $S = K(Ag_1)^{2/3}(Ag_t)/(Ag_1)V$ in which $Ag_1$ is the concentration of free silver and $Ag_t$ is the total concentration of silver.

10. A process according to any of Claims 1 to 9, characterised in that the zinc sulphide used is ground to a grain size corresponding to a $d_{80}$ less than 10 microns.